(19) **Europäisches Patentamt / European Patent Office / Office européen des brevets**

(11) **EP 2 815 501 B1**

(12) **FASCICULE DE BREVET EUROPEEN**

(45) Date de publication et mention
de la délivrance du brevet:
**23.03.2016 Bulletin 2016/12**

(21) Numéro de dépôt: **13703375.9**

(22) Date de dépôt: **05.02.2013**

(51) Int Cl.:
*H02M 7/493* (2007.01)     *H02M 1/00* (2006.01)
*H02P 27/06* (2006.01)     *H02P 3/18* (2006.01)
*H02P 3/22* (2006.01)     *H02M 1/32* (2007.01)

(86) Numéro de dépôt international:
**PCT/EP2013/052213**

(87) Numéro de publication internationale:
**WO 2013/120727 (22.08.2013 Gazette 2013/34)**

(54) **MODULE DE RÉGÉNÉRATION D'ÉNERGIE ÉLECTRIQUE POUR VARIATEUR DE VITESSE**

MODUL ZUR REGENERIERUNG VON ELEKTRISCHER ENERGIE FÜR EINEN
DREHZAHLVARIATOR

MODULE FOR THE REGENERATION OF ELECTRICAL ENERGY FOR A SPEED VARIATOR

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **13.02.2012 FR 1251297**

(43) Date de publication de la demande:
**24.12.2014 Bulletin 2014/52**

(73) Titulaire: **Schneider Toshiba Inverter Europe SAS
27120 Pacy sur Eure (FR)**

(72) Inventeurs:
• **BOULHARTS, Hocine
F-78510 Triel sur Seine (FR)**

• **CONRATH, Christian
F-92500 Rueil-Malmaison (FR)**
• **VANG, Heu
F-92506 Rueil Malmaison cedex (FR)**

(74) Mandataire: **Dufresne, Thierry et al
Schneider Electric Industries SAS
Service Propriété Industrielle
35 rue Joseph Monier - CS 30323
92506 Rueil-Malmaison Cedex (FR)**

(56) Documents cités:
**EP-A2- 1 641 110     FR-A1- 2 737 946
JP-A- 2004 248 383     US-A1- 2005 122 082**

## Description

## Domaine technique de l'invention

La présente invention se rapporte à un module de régénération d'énergie électrique pour variateur de vitesse. L'invention se rapporte également à un système de commande comportant un variateur de vitesse et le module de régénération d'énergie électrique de l'invention.

## Etat de la technique

De manière connue, un variateur de vitesse est destiné à la commande d'une charge électrique. Il comporte trois phases d'entrée connectées à un réseau de distribution électrique, un étage redresseur comportant un pont de diodes destiné à convertir la tension alternative fournie par le réseau en une tension continue, un bus continu d'alimentation connecté à l'étage redresseur, un condensateur de bus destiné à maintenir la tension du bus à une valeur continue et un étage onduleur connecté en aval du bus continu d'alimentation et destiné à convertir la tension continue en une tension variable à appliquer à la charge électrique.

La phase de freinage de la charge électrique libère de l'énergie électrique qui est renvoyée sur le bus continu d'alimentation du variateur de vitesse. Cette énergie électrique récupérée peut être gérée de différentes façons. Une première façon consiste à la dissiper dans une résistance de freinage, une deuxième façon consiste à la stocker dans un banc capacitif de manière à pouvoir la réutiliser ultérieurement, une troisième façon consiste à la renvoyer sur le réseau de distribution électrique et une dernière façon consiste à renvoyer l'énergie électrique vers d'autres appareils connectés sur le bus DC.

Dans cette troisième façon de gérer l'énergie électrique générée lors du freinage de la charge électrique, différentes topologies de variateur de vitesse ont été envisagées. Ces topologies nécessitent en règle générale de modifier la configuration classique du variateur de vitesse telle que décrite ci-dessus, par exemple en le dotant d'un étage redresseur actif.

Il est connu des documents EP1614110, US2005122082, FR2737946, JP2004248383 des architectures permettant de récupérer l'énergie de freinage d'un variateur de vitesse existant. Les différentes architectures présentées dans ces documents comportent un premier convertisseur de type élévateur ou "flyback" réalisant une conversion source de tension DC (c'est-à-dire continu)/source de tension DC. A la sortie de ce convertisseur est placé un ou plusieurs condensateurs. Un deuxième convertisseur réalise la conversion source de tension DC/source de courant AC. Le réseau étant une source de tension, il est nécessaire d'ajouter une inductance entre le deuxième convertisseur et le réseau.

Ces architectures ne sont pas optimales car elles nécessitent l'emploi de deux inductances, une inductance côté réseau et une inductance pour le premier convertisseur de tension.

Le but de l'invention est donc de proposer un module de régénération d'énergie électrique qui peut être adapté sur un variateur de vitesse classique, sans modifier la structure de ce dernier. De plus, cette solution est optimisée d'un point de vue coût et encombrement.

## Exposé de l'invention

Ce but est atteint par un module de régénération d'énergie électrique destiné à être adapté sur un variateur de vitesse, ledit variateur de vitesse comportant :

- trois phases d'entrée connectées à un réseau de distribution électrique,
- un étage redresseur connecté aux trois phases d'entrée,
- un bus continu d'alimentation comportant une première ligne d'alimentation et une deuxième ligne d'alimentation,
- un étage onduleur destiné à être connecté à une charge électrique,
 ledit module comportant :
- une première borne d'entrée et une deuxième borne d'entrée destinées à être connectées chacune sur une ligne d'alimentation du bus continu d'alimentation du variateur de vitesse,
- trois bornes de sortie destinées à être connectées sur les trois phases d'entrée du variateur de vitesse,
- un convertisseur de tension connecté aux deux bornes d'entrée et comprenant une inductance de manière à former une source de courant en vue de contrôler le courant de freinage de la charge électrique,
- un circuit d'aiguillage connecté en série avec ladite inductance et destiné à aiguiller le courant de freinage vers l'une des trois bornes de sortie.

Dans la présente invention, le circuit d'aiguillage réalisant une conversion de type tension AC en courant DC est ainsi connecté directement à une inductance. Ce n'est pas le cas dans les solutions antérieures. La solution de l'invention permet donc de limiter le nombre d'inductances employées, donc de réduire le coût et l'encombrement du module.

Selon une particularité, le convertisseur de tension et le circuit d'aiguillage comportent des interrupteurs commandés à une fréquence synchronisée sur la fréquence du réseau de distribution électrique.

Selon une autre particularité, le convertisseur de tension est de type abaisseur ou de type abaisseur-élévateur.

Selon une autre particularité, le convertisseur de tension peut être réalisé sous la forme d'une topologie multiniveaux.

Selon une autre particularité, le convertisseur de tension comporte une inductance et un bras de commutation connecté à ladite inductance.

Selon un premier mode de réalisation, le circuit d'aiguillage comporte un premier groupe de trois interrupteurs qui sont connectés chacun à la deuxième borne d'entrée et à une borne de sortie distincte et un deuxième groupe de trois interrupteurs qui sont connectés chacun à l'inductance et à une borne de sortie distincte.

Selon un deuxième mode de réalisation, le circuit d'aiguillage comporte un premier groupe de trois interrupteurs qui sont connectés chacun à la première borne d'entrée et à une borne de sortie distincte et un deuxième groupe de trois interrupteurs qui sont connectés chacun à l'inductance et à une borne de sortie distincte.

Selon une autre particularité, le module comporte un dispositif de filtrage de type RC.

L'invention concerne également un système de commande comportant un variateur de vitesse, ledit variateur de vitesse comprenant :

- trois phases d'entrée connectées à un réseau de distribution électrique,
- un étage redresseur connecté aux trois phases d'entrée,
- un bus continu d'alimentation comportant une première ligne d'alimentation et une deuxième ligne d'alimentation,
- un étage onduleur destiné à être connecté à une charge électrique,
- un module de régénération d'énergie électrique tel que défini ci-dessus, ledit module étant destiné à être adapté sur le variateur de vitesse.

**Brève description des figures**

D'autres caractéristiques et avantages vont apparaître dans la description détaillée qui suit faite en regard des dessins annexés dans lesquels :

- la figure 1 représente le schéma d'un variateur de vitesse,

- la figure 2 représente, selon une première variante de réalisation, le module de régénération d'énergie électrique adaptable sur le variateur de vitesse de la figure 1,

- la figure 3 représente, selon une deuxième variante de réalisation, le module de régénération d'énergie électrique adaptable sur le variateur de vitesse de la figure 1,

- la figure 4 représente, selon une troisième variante de réalisation, le module de régénération d'énergie électrique adaptable sur le variateur de vitesse de la figure 1,

- la figure 5 représente un synoptique de contrôle du convertisseur de tension employé dans le module de régénération d'énergie électrique de l'invention,

- la figure 6 représente un diagramme temporel des tensions d'entrées, du courant de ligne et de l'état des interrupteurs du circuit d'aiguillage.

**Description détaillée d'au moins un mode de réalisation**

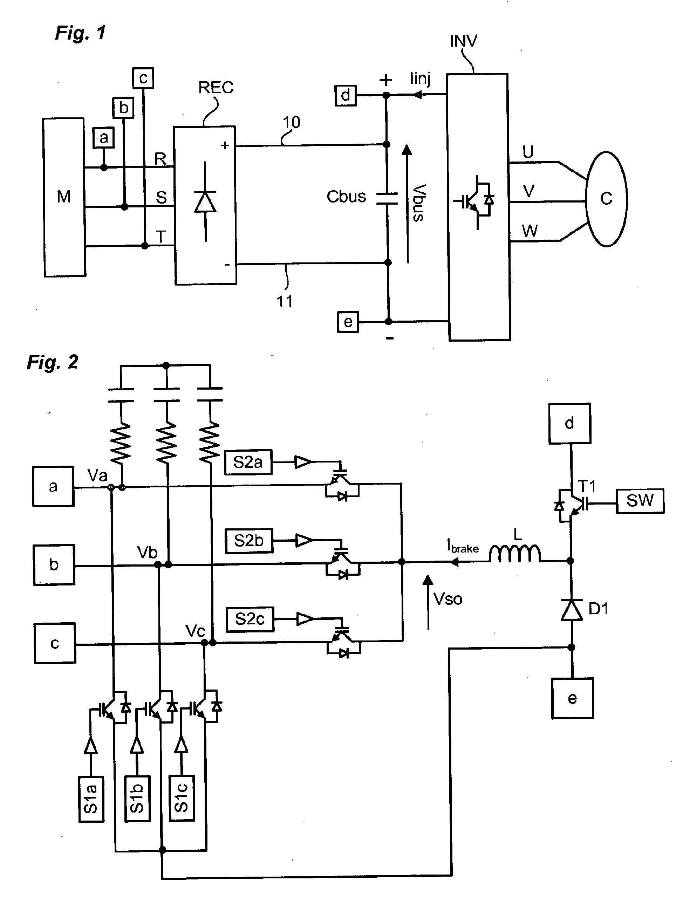

En référence à la figure 1, un variateur de vitesse est connecté entre un réseau M de distribution électrique et une charge électrique C et il comporte :

- Des phases d'entrée R, S, T, par exemple trois phases d'entrée, qui sont connectées au réseau M de distribution électrique pour recevoir une tension alternative fournie par le réseau. Ces phases d'entrée peuvent comporter des inductances de ligne (non représentées).

- Un étage redresseur REC connecté aux phases d'entrées, composé d'un pont de diodes et destiné à redresser la tension alternative fournie par le réseau M de distribution électrique.

- Un bus continu d'alimentation connecté au module redresseur REC et comportant une première ligne d'alimentation 10 à un potentiel électrique positif et une deuxième ligne d'alimentation 11 à un potentiel électrique négatif.

- Un condensateur de bus Cbus connecté à la première ligne d'alimentation 10 et à la deuxième ligne d'alimentation 11 et destiné à maintenir le bus d'alimentation à une tension Vbus continue.

- Un étage onduleur INV connecté au bus continu d'alimentation et composé de plusieurs bras de commutation commandés pour fournir une tension variable à la charge électrique C située en aval.

- Des lignes de sortie U, V, W reliant l'étage onduleur INV à la charge électrique C.

De manière connue, les bras de commutation du module onduleur comportent des transistors commandés par un système de commande à partir d'une loi de commande pour appliquer des tensions à la charge électrique C.

L'invention concerne un module de régénération d'énergie électrique destiné à être adapté sur un variateur de vitesse tel que décrit ci-dessus et représenté sur la figure 1. Ce module de régénération d'énergie électrique est agencé pour permettre de renvoyer l'énergie électrique générée lors du freinage de la charge électrique C vers le réseau M de distribution électrique. La charge électrique C joue alors le rôle de générateur tandis que le réseau M de distribution électrique joue le rôle de récepteur de puissance.

Ce module présente l'avantage de conférer une fonction de régénération d'énergie électrique à un variateur de vitesse existant, sans modifier la structure de celui-ci.

Le module de régénération d'énergie électrique de l'invention comporte une première borne d'entrée d destinée à être connectée sur la première ligne d'alimentation 10 du bus continu d'alimentation, en amont du condensateur de bus Cbus, et une deuxième borne d'entrée e destinée à être connectée sur la deuxième ligne d'alimentation 11 du bus continu d'alimentation, en amont du condensateur de bus Cbus.

Le module de régénération d'énergie électrique comporte trois bornes de sortie a, b, c distinctes destinées à être connectées chacune à une phase d'entrée R, S, T distincte du variateur de vitesse.

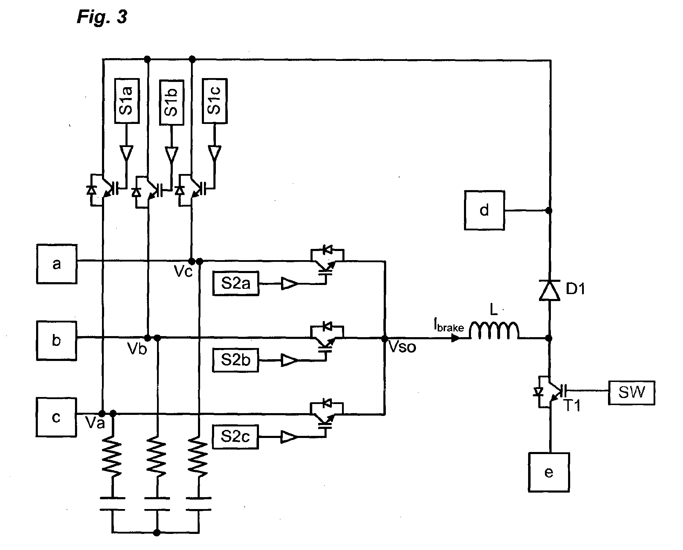

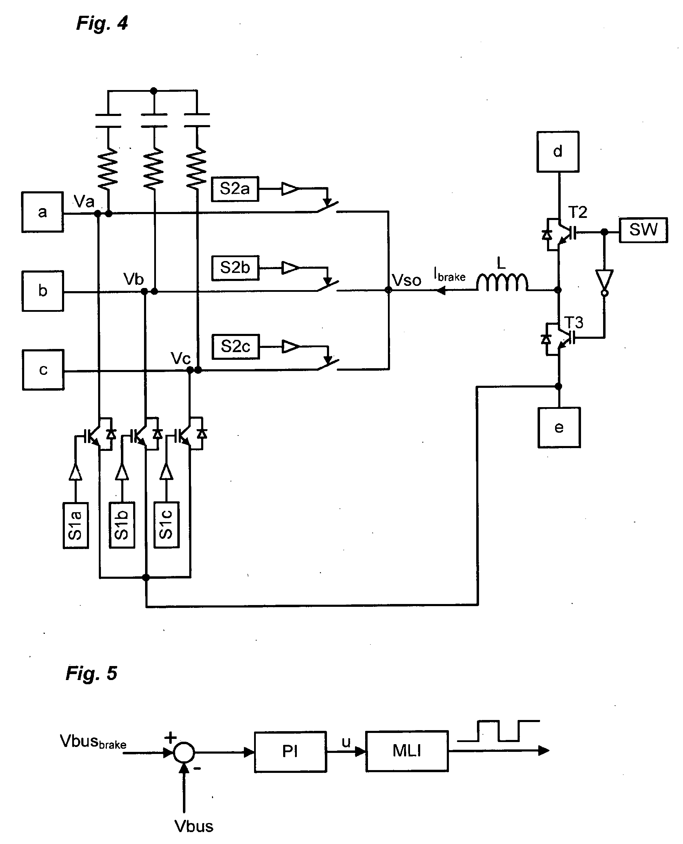

Le module de régénération d'énergie électrique comporte un convertisseur de tension permettant de contrôler le courant $I_{brake}$ généré lors du freinage de la charge électrique C. Ce convertisseur de tension est connecté aux deux bornes d'entrée d, e et comporte plus particulièrement un bras de commutation et une inductance L. le convertisseur réalise donc une fonction de conversion d'une tension continue disponible sur le bus continu d'alimentation en un courant continu. Le convertisseur de tension peut être de type abaisseur (convertisseur "buck") comme sur les figures 2 et 3 ou de type abaisseur-élévateur (convertisseur "buck-boost") comme représenté sur la figure 4. Ce convertisseur de tension peut également être réalisé selon une topologie multi-niveaux.

Sur les figures 2 et 3, le bras de commutation du convertisseur de tension de type abaisseur comporte un transistor T1 et une diode D1 connectée audit transistor. Le point milieu entre le transistor T1 et la diode D1 est connecté à l'inductance L. Des signaux de commande SW permettent de commander le bras de commutation. Dans la connexion du bras de commutation au variateur de vitesse, deux variantes de réalisation sont proposées

- dans une première variante de réalisation représentée sur la figure 2, le transistor T1 est connecté à la première borne d'entrée d du module et la diode D1 est connectée à la deuxième borne d'entrée e du module,

- dans une deuxième variante de réalisation représentée sur la figure 3, le transistor T1 est connecté à la deuxième borne d'entrée e et la diode est connectée à la première borne d'entrée d.

Sur la figure 4, le bras de commutation du convertisseur de tension de type abaisseur-élévateur comporte deux transistors T2, T3 en série, chaque transistor comportant une diode en parallèle. Le point milieu situé entre les deux transistors T2, T3 est connecté à l'inductance L. Cette architecture permettra notamment de limiter les harmoniques en entrée du variateur de vitesse et donc de pouvoir respecter des contraintes en termes de THDi ("Total Harmonic Distortion of Current") et de PWHD ("Partial Weighted Harmonic Distortion").

Le module de régénération d'énergie électrique comporte également un circuit d'aiguillage connecté au convertisseur de tension et plus particulièrement à son inductance L. Ce circuit d'aiguillage est destiné à aiguiller le courant généré lors du freinage de la charge vers l'une ou l'autre des phases d'entrée R, S, T du variateur de vitesse qui sont connectées au réseau M de distribution électrique. Ce circuit d'aiguillage se compose de deux groupes de trois interrupteurs (S1a, S1 b, S1c, S2a, S2b, S2c). Ce circuit d'aiguillage est connecté directement à l'inductance L et réalise une conversion entre le courant continu et la tension alternative du réseau M de distribution électrique. L'entrée de ce convertisseur étant connectée à une source de courant, aucune inductance supplémentaire n'est nécessaire.

Selon le premier mode de réalisation représenté sur la figure 2, chacun des trois interrupteurs S1a, S1b, S1c du premier groupe est connecté d'une part à la deuxième borne d'entrée e du module et d'autre part à une borne de sortie a, b, c distincte du module. Selon le deuxième mode de réalisation représenté sur la figure 3, chacun des trois interrupteurs S1a, S1b, S1c du premier groupe est connecté d'une part à la première borne d'entrée d du module et d'autre part à une borne de sortie a, b, c distincte du module. Dans le deuxième groupe, chacun des trois interrupteurs S2a, S2b, S2c est connecté d'une part à l'inductance L et d'autre part à une borne de sortie a, b, c distincte du module.

Le module de régénération d'énergie électrique comporte également un dispositif de filtrage de type RC connecté sur ses trois bornes de sortie.

En fonctionnement, l'énergie générée lors du freinage de la charge électrique est injectée sur le bus continu par l'intermédiaire de l'étage onduleur INV de sortie. Cela a pour effet d'augmenter la tension aux bornes du condensateur de bus Cbus. Lorsque la tension du bus devient supérieure à une tension de freinage Vbus$_{brake}$, le convertisseur de tension de type abaisseur permet de réinjecter l'énergie de freinage sur le réseau M de distribution électrique. Les interrupteurs du circuit d'aiguillage sont commandés de manière à injecter successivement un courant sur les différentes phases d'entrée de manière à reconstituer la tension Vso. La tension Vso est présente entre le point de connexion du convertisseur abaisseur au circuit d'aiguillage et la deuxième ligne d'alimentation 11 du bus continu d'alimentation et correspond donc à la tension redressée triphasée du réseau M de distribution électrique.

La reconstitution de cette tension Vso est réalisée par la commande des deux groupes d'interrupteurs du circuit d'aiguillage. Les commutations des interrupteurs sont synchronisées à la fréquence du réseau de distribution électrique (par exemple 50Hz) et sont réalisées en tenant compte des valeurs des trois tensions simples Van, Vbn, Vcn mesurées sur les phases d'entrée du variateur de vitesse par rapport au neutre ou d'au moins deux tensions composées mesurées entre les phases d'entrée.

Par exemple, en tenant compte des tensions simples, la reconstitution de la tension Vso suit l'algorithmique suivant :

(Van $\geq$ Vbn) et (Van $\geq$ Vcn) alors fermer S2a et ouvrir S2b et S2c
(Vbn $\geq$ Van) et (Vbn $\geq$ Vcn) alors fermer S2b et ouvrir S2a et S2c
(Vcn $\geq$ Van) et (Vcn $\geq$ Vbn) alors fermer S2c et ouvrir S2a et S2b

(Van $\leq$ Vbn) et (Van $\leq$ Vcn) alors fermer S1a et ouvrir S1b et S1c
(Vbn $\leq$ Van) et (Vbn $\leq$ Vcn) alors fermer S1b et ouvrir S1a et S1c
(Vcn $\leq$ Van) et (Vcn $\leq$ Vbn) alors fermer S1 c et ouvrir S1 a et S1 b

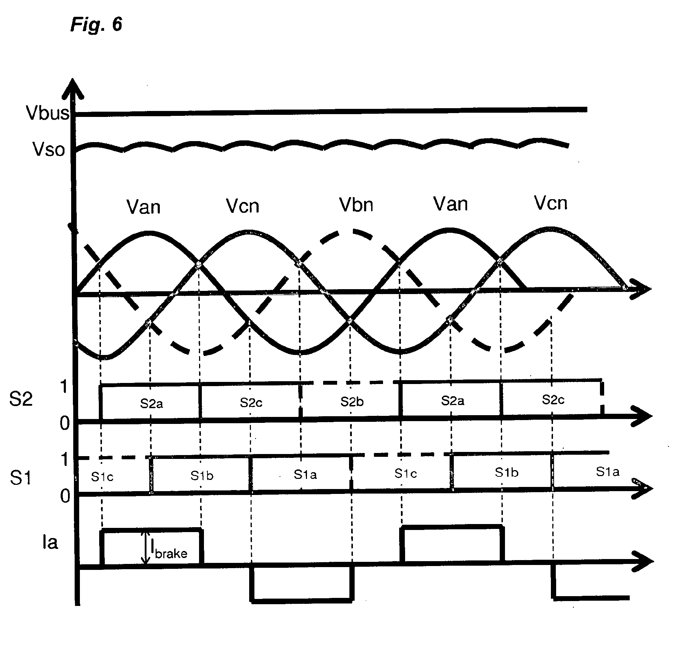

La figure 6 permet d'illustrer la séquence d'actionnement des interrupteurs des deux groupes. La figure montre ainsi la variation de la tension Vso, la variation des tensions simples Van, Vbn, Vcn ainsi que l'état 1 ou 0 pris par les interrupteurs de chaque groupe en fonction des niveaux des tensions simples et la variation du courant (Ia) réinjecté sur la phase d'entrée R connectée à la borne de sortie a du module.

Le contrôle du convertisseur de tension peut être réalisé de différentes manières. Dans le cas d'un convertisseur de tension de type abaisseur, le contrôle est par exemple explicité ci-dessous, en liaison avec la figure 5.

La tension Vso est constituée d'arches de sinus (figure 6). La puissance de freinage (Pbrake) est injectée au réseau selon un contrôle qui vérifie l'équilibre des puissances. La puissance injectée est définie selon un rendement de la chaîne de freinage :

$$Pinj = C_{brake} \cdot \Omega \cdot \eta$$

$C_{brake}$ étant le couple de freinage, $\Omega$ étant la vitesse de rotation de l'arbre moteur et $\eta$ étant le coefficient de rendement de la conversion de l'énergie mécanique à l'énergie électrique injectée au bus continu d'alimentation à l'entrée de l'onduleur.

Usuellement, la puissance injectée Pinj est définie avec les grandeurs électriques mesurables, la tension de bus (Vbus) et le courant injecté ($I_{inj}$) provenant de la charge électrique C fonctionnant en mode générateur :

$$Pinj = Vbus \cdot I_{inj} \, .$$

La commande u du convertisseur de tension (définissant le rapport cyclique de fonctionnement du transistor T1 du convertisseur de tension) doit satisfaire à l'équation des tensions du convertisseur de tension de type abaisseur :

$$Vso = u \cdot Vbus$$

On définit l'évolution basse fréquence moyennée de la commande u (désignée < u >) de la manière suivante :

$$< u > = \frac{Vso_{avg}}{Vbus_{brake}}$$

dans laquelle $Vso_{avg}$ correspond à la moyenne de tension Vso qui s'écrit de la manière suivante :

$$Vso_{avg} = \frac{3}{\pi}\hat{U}_{\parallel}$$

avec $\hat{U}_{\parallel}$ qui correspond à la tension crête du réseau M (tension crête entre phases).

La commande < u > est ainsi réglée pour maintenir la tension Vbus à la tension de freinage $Vbus_{brake}$ désirée.

Normalement la tension de freinage $Vbus_{brake}$ est définie supérieure à la tension crête du réseau $\hat{U}_{\parallel}$ (Tension crête entre phases) pour satisfaire aux règles de fonctionnement d'un convertisseur de tension de type abaisseur.

Le courant moyen maximum de freinage $I_{brake}$ injecté au réseau est donné par l'expression suivante, avec $\hat{U}_{\parallel min}$ la tension minimum du réseau :

$$I_{brake}^{max} = \frac{Pinj}{\frac{3}{\pi}\hat{U}_{\parallel min}},$$

Un premier synoptique de contrôle du convertisseur de tension de type abaisseur est représenté sur la fig. 5. La tension Vbus mesurée sur le bus continu d'alimentation est comparée à une consigne de tension de freinage $Vbus_{brake}$ du bus. La différence entre la mesure et la consigne est injectée dans un régulateur à action proportionnelle intégrale (PI) de manière à en déduire la commande u à appliquer à une unité de commande à modulation de largeur d'impulsion (MLI). Cette unité de commande applique la modulation sur le convertisseur de tension de type abaisseur.

D'autres structures de contrôle du convertisseur de tension de type abaisseur sont bien entendu possibles. Un deuxième contrôle pourrait être basé sur le courant de freinage ($I_{brake}$). Le contrôle emploierait alors une boucle interne de courant et une boucle externe de la tension Vbus du bus continu d'alimentation.

Un contrôle adapté serait également mis en place pour un convertisseur de tension à deux transistors T2, T3 du type de celui représenté sur la figure 4.

**Revendications**

1. Module de régénération d'énergie électrique destiné à être adapté sur un variateur de vitesse, ledit variateur de vitesse comportant :

   - trois phases d'entrée (R, S, T) connectées à un réseau (M) de distribution électrique,
   - un étage redresseur (REC) connecté aux trois phases d'entrée,
   - un bus continu d'alimentation comportant une première ligne d'alimentation (10) et une deuxième ligne d'alimentation (11) entre lesquelles est appliquée une tension continue fournie en sortie par l'étage redresseur (REC),
   - un étage onduleur (INV) destiné à être connecté en entrée au bus continu d'alimentation et en sortie à une charge électrique (C),

   ledit module étant **caractérisé en ce qu'**il comporte :

   - une première borne d'entrée (d) et une deuxième borne d'entrée (e) destinées à être connectées chacune sur une ligne d'alimentation du bus continu d'alimentation du variateur de vitesse,
   - trois bornes de sortie (a, b, c) destinées à être connectées sur les trois phases d'entrée (R, S, T) du variateur de vitesse,

- un convertisseur de tension connecté aux deux bornes d'entrée (d, e) et comprenant en sortie une inductance (L) de manière à former une source de courant en vue de contrôler le courant de freinage de la charge électrique (C) le convertisseur réalisant une fonction de conversion de la tension continue disponible sur le bus continu d'alimentation en un courant continu,
- un circuit d'aiguillage connecté directement à ladite inductance et destiné à aiguiller le courant de freinage ($I_{brake}$) vers l'une des trois bornes de sortie (a, b, c) le circuit d'aiguillage réalisant une conversion entre le courant continu et la tension alternative du réseau (M) de distribution électrique.

2. Module selon la revendication 1, **caractérisé en ce que** le convertisseur de tension et le circuit d'aiguillage comportent des interrupteurs commandés à une fréquence synchronisée sur la fréquence du réseau (M) de distribution électrique.

3. Module selon la revendication 1 ou 2, **caractérisé en ce que** le convertisseur de tension est de type abaisseur.

4. Module selon la revendication 1 ou 2, **caractérisé en ce que** le convertisseur de tension est de type abaisseur-élévateur.

5. Module selon l'une des revendications 1 à 4, **caractérisé en ce que** le convertisseur de tension est multi-niveaux.

6. Module selon la revendication 3 ou 4, **caractérisé en ce que** le convertisseur de tension comporte une inductance (L) et un bras de commutation connecté à ladite inductance (L).

7. Module selon la revendication 6, **caractérisé en ce que** le circuit d'aiguillage comporte un premier groupe de trois interrupteurs (S1a, S1b, S1c) qui sont connectés chacun à la deuxième borne d'entrée (e) et à une borne de sortie (a, b, c) distincte et un deuxième groupe de trois interrupteurs (S2a, S2b, S2c) qui sont connectés chacun à l'inductance (L) et à une borne de sortie (a, b, c) distincte.

8. Module selon la revendication 6, **caractérisé en ce que** le circuit d'aiguillage comporte un premier groupe de trois interrupteurs (S1a, S1b, S1c) qui sont connectés chacun à la première borne d'entrée (d) et à une borne de sortie (a, b, c) distincte et un deuxième groupe de trois interrupteurs (S2a, S2b, S2c) qui sont connectés chacun à l'inductance (L) et à une borne de sortie (a, b, c) distincte.

9. Module selon l'une des revendications 1 à 8, **caractérisé en ce qu'**il comporte un dispositif de filtrage de type RC.

10. Système de commande comportant un variateur de vitesse, ledit variateur de vitesse comprenant :

- trois phases d'entrée (R, S, T) connectées à un réseau (M) de distribution électrique,
- un étage redresseur (REC) connecté aux trois phases d'entrée,
- un bus continu d'alimentation comportant une première ligne d'alimentation (10) et une deuxième ligne d'alimentation (11),
- un étage onduleur (INV) destiné à être connecté à une charge électrique (C), ledit système étant **caractérisé en ce qu'**il comporte un module de régénération d'énergie électrique tel que défini dans l'une des revendications précédentes, ledit module étant destiné à être adapté sur le variateur de vitesse.

**Patentansprüche**

1. Modul zur Regenerierung von elektrischer Energie, das dazu bestimmt ist, auf einen Drehzahlvariator angebracht zu werden, wobei der Drehzahlvariator Folgendes aufweist:

- drei Eingangsphasen (R, S, T), die an ein Stromversorgungsnetz (M) angeschlossen sind,
- eine Gleichrichterstufe (REC), die an die drei Eingangsphasen angeschlossen ist,
- einen Gleichstromenergiebus, der eine erste Stromversorgungsleitung (10) und eine zweite Stromversorgungsleitung (11) aufweist, zwischen denen eine Gleichspannung anliegt, die am Ausgang durch die Gleichrichterstufe (REC) zugeführt wird,
- eine Wechselrichterstufe (INV), die dazu bestimmt ist, am Eingang an den Gleichstromenergiebus und am Ausgang an eine elektrische Last (C) angeschlossen zu werden,

wobei das Modul **dadurch gekennzeichnet, dass** es Folgendes aufweist:

- eine erste Eingangsklemme (d) und eine zweite Eingangsklemme (e), die dazu bestimmt sind, jeweils an eine Stromversorgungsleitung des Gleichstromenergiebusses des Drehzahlvariators angeschlossen zu werden,
- drei Ausgangsklemmen (a, b, c), die dazu bestimmt sind, an die drei Eingangsphasen (R, S, T) des Drehzahlvariators angeschlossen zu werden,
- einen Spannungswandler, der an die zwei Eingangsklemmen (d, e) angeschlossen ist und der am Ausgang eine Induktanz (L) aufweist, um eine Stromquelle zu bilden, um den Bremsstrom der elektrischen Last (C) zu steuern, wobei der Wandler eine Funktion der Umwandlung der Gleichspannung, die auf dem Gleichstromenergiebus vorhanden ist, in einen Gleichstrom ausführt,
- eine Verzweigungsschaltung, die direkt an die Induktanz angeschlossen ist und dazu bestimmt ist, den Bremsstrom ($I_{brake}$) zu einer der drei Ausgangsklemmen (a, b, c) hinzuführen, wobei die Verzweigungsschaltung eine Umwandlung zwischen dem Gleichstrom und der Wechselspannung des Stromversorgungsnetzes (M) ausführt.

2. Modul nach Anspruch 1, **dadurch gekennzeichnet, dass** der Spannungswandler und die Verzweigungsschaltung Schalter aufweisen, die mit einer Frequenz gesteuert sind, die mit der Frequenz des Stromversorgungsnetzes (M) synchronisiert ist.

3. Modul nach Anspruch 1 oder 2, **dadurch gekennzeichnet, dass** der Spannungswandler vom Typ des Spannungsabwärtswandlers ist.

4. Modul nach Anspruch 1 oder 2, **dadurch gekennzeichnet, dass** der Spannungswandler vom Typ des Spannungsaufwärtswandlers ist.

5. Modul nach Anspruch 1 bis 4, **dadurch gekennzeichnet, dass** der Spannungswandler ein Mehrebenenwandler ist.

6. Modul nach Anspruch 3 oder 4, **dadurch gekennzeichnet, dass** der Spannungswandler eine Induktanz (L) und einen Schaltarm aufweist, der an der Induktanz (L) angeschlossen ist.

7. Modul nach Anspruch 6, **dadurch gekennzeichnet, dass** die Verzweigungsschaltung eine erste Gruppe von drei Schaltern (S1 a, S1 b, S1c), die jeweils an die zweite Eingangsklemme (e) und an eine unterschiedliche Ausgangsklemme (a, b, c) angeschlossen sind, und eine zweite Gruppe von drei Schaltern (S2a, S2b, S2c) aufweist, die jeweils an die Induktanz (L) und an eine unterschiedliche Ausgangsklemme (a, b, c) angeschlossen sind.

8. Modul nach Anspruch 6, **dadurch gekennzeichnet, dass** die Verzweigungsschaltung eine erste Gruppe von drei Schaltern (S1 a, S1 b, S1c), die jeweils an die erste Eingangsklemme (d) und an eine unterschiedliche Ausgangsklemme (a, b, c) angeschlossen sind, und eine zweite Gruppe von drei Schaltern (S2a, S2b, S2c) aufweist, die jeweils an die Induktanz (L) und an eine unterschiedliche Ausgangsklemme (a, b, c) angeschlossen sind.

9. Modul nach einem der Ansprüche 1 bis 8, **dadurch gekennzeichnet, dass** es eine Filtervorrichtung vom RC-Typ aufweist.

10. Steuersystem, umfassend einen Drehzahlvariator, wobei der Drehzahlvariator Folgendes aufweist:

- drei Eingangsphasen (R, S, T), die an ein Stromversorgungsnetz (M) angeschlossen sind,
- eine Gleichrichterstufe (REC), die an die drei Eingangsphasen angeschlossen ist,
- einen Gleichstromenergiebus, der eine erste Stromversorgungsleitung (10) und eine zweite Stromversorgungsleitung (11) aufweist,
- eine Wechselrichterstufe (INV), die dazu bestimmt ist, an eine elektrische Last (C) angeschlossen zu werden,
wobei das System **dadurch gekennzeichnet ist, dass** es ein Modul zur Regenerierung von elektrischer Energie aufweist, wie in einem der vorhergehenden Ansprüche definiert, wobei das Modul dazu bestimmt ist, auf den Drehzahlvariator angebracht zu werden.

**Claims**

1. Electrical energy regeneration module intended to be adapted to a variable speed drive, said variable speed drive comprising:

- three input phases (R, S, T), connected to an electrical distribution network (M),
- a rectifier stage (REC) connected to the three input phases,
- a DC power supply bus comprising a first power supply line (10) and a second power supply line (11) between which is applied a DC voltage supply as output by the rectifier stage (REC),
- an inverter stage (INV) intended to be connected as input to the DC power supply bus and as output to an electrical load (C),

said module being **characterized in that** it comprises:

- a first input terminal (d) and a second input terminal (e) intended to be each connected to a power supply line of the DC power supply bus of the variable speed drive,
- three output terminals (a, b, c) intended to be connected to the three input phases (R, S, T) of the variable speed drive,
- a voltage converter connected to the two input terminals (d, e) and comprising, at the output, an inductor (L) so as to form a current source in order to control the braking current of the electrical load (C), the converter performing a function of conversion of the DC voltage available on the DC power supply bus into a DC current,
- a switching circuit connected directly to said inductor and intended to switch the braking current ($I_{brake}$) to one of the three output terminals (a, b, c), the switching circuit performing a conversion between the DC current and the alternating voltage of the electrical distribution network (M).

2. Module according to Claim 1, **characterized in that** the voltage converter and the switching circuit comprise switches controlled at a frequency synchronized on the frequency of the electrical distribution network (M).

3. Module according to Claim 1 or 2, **characterized in that** the voltage converter is of step-down type.

4. Module according to Claim 1 or 2, **characterized in that** the voltage converter is of step-up-step-down type.

5. Module according to one of Claims 1 to 4, **characterized in that** the voltage converter is multi-level.

6. Module according to Claim 3 or 4, **characterized in that** the voltage converter comprises an inductor (L) and a switching arm connected to said inductor (L).

7. Module according to Claim 6, **characterized in that** the switching circuit comprises a first group of three switches (S1a, S1b, S1c) which are each connected to the second input terminal (e) and to a distinct output terminal (a, b, c) and a second group of three switches (S2a, S2b, S2c) which are each connected to the inductor (L) and to a distinct output terminal (a, b, c).

8. Module according to Claim 6, **characterized in that** the switching circuit comprises a first group of three switches (S1a, S1b, S1c) which are each connected to the first input terminal (d) and to a distinct output terminal (a, b, c) and a second group of three switches (S2a, S2b, S2c) which are each connected to the inductor (L) and to a distinct output terminal (a, b, c).

9. Module according to one of Claims 1 to 8, **characterized in that** it comprises a filtering device of RC type.

10. Control system comprising a variable speed drive, said variable speed drive comprising:

- three input phases (R, S, T) connected to an electrical distribution network (M),
- a rectifier stage (REC) connected to the three input phases,
- a DC power supply bus comprising a first power supply line (10) and a second power supply line (11),
- an inverter stage (INV) intended to be connected to an electrical load (C), said system being **characterized in that** it comprises an electrical energy regeneration module as defined in one of the preceding claims, said module being intended to be adapted to the variable speed drive.

**Fig. 1**

**Fig. 2**

**Fig. 3**

## Fig. 4

## Fig. 5

**Fig. 6**

**EP 2 815 501 B1**

## RÉFÉRENCES CITÉES DANS LA DESCRIPTION

**Documents brevets cités dans la description**

- EP 1614110 A
- US 2005122082 A
- FR 2737946
- JP 2004248383 B